(19) **Europäisches Patentamt**

**European Patent Office**

**Office européen des brevets**

(11) Veröffentlichungsnummer: **0 193 940 B1**

(12) **EUROPÄISCHE PATENTSCHRIFT**

(45) Veröffentlichungstag der Patentschrift: **13.11.91**

(21) Anmeldenummer: **86102890.0**

(22) Anmeldetag: **05.03.86**

(51) Int. Cl.⁵: **G02B 6/44**

(54) **Einrichtung zur Weiterbehandlung von mindestens einen Lichtwellenleiter enthaltendem strangförmigen Gut.**

(30) Priorität: **07.03.85 DE 3508185**

(43) Veröffentlichungstag der Anmeldung:
**10.09.86 Patentblatt 86/37**

(45) Bekanntmachung des Hinweises auf die Patenterteilung:
**13.11.91 Patentblatt 91/46**

(84) Benannte Vertragsstaaten:
**AT BE CH DE FR GB IT LI NL SE**

(56) Entgegenhaltungen:
**EP-A- 0 117 594**
**EP-A- 3 111 963**
**US-A- 4 226 653**

(73) Patentinhaber: **SIEMENS AKTIENGESELL-SCHAFT**
**Wittelsbacherplatz 2**
**W-8000 München 2(DE)**

(72) Erfinder: **Einsle, Günter**
**Hofbrunnstrasse 52**
**W-8000 München 71(DE)**
Erfinder: **Mayr, Ernst, Ing. grad.**
**Wernbergstrasse 5**
**W-8130 Starnberg(DE)**
Erfinder: **Oestreich, Ulrich, Dipl.-Ing.**
**Karl-Witthalm-Strasse 15**
**W-8000 München 70(DE)**
Erfinder: **Schöber, Gernot, Ing. grad.**
**Waterloostrasse 63**
**W-8000 München 71(DE)**
Erfinder: **Schrey, Wolfgang, Dipl.-Ing.**
**Kraelerstrasse 8**
**W-8000 München 70(DE)**

EP 0 193 940 B1

## Beschreibung

Die Erfindung betrifft eine Einrichtung zur Behandlung von strangförmigem Gut, das mindestens einen Lichtwellenleiter enthält, und das eine lose Umhüllung aufweist, bestehend aus einem
- Extruder zum Aufbringen der losen Umhüllung, und
- zwei unabhängig temperierbaren Kammern die dem Ausgang des Extruders nachgeschaltet sind, und durch die das strangförmige Gut zur Weiterbehandlung geführt wird.

Eine Einrichtung dieser Art ist aus der DE-A1 32 39 024 bekannt, wobei die erste temperierte Kammer durch ein etwa geradlinig durchlaufenes Kühlbecken gebildet wird, an dessen Ausgang ein Raupenabzug angeordnet ist. Dahinter ist eine temperierte Kühlkammer vorgesehen, in deren Innerem die von einer Umhüllung umgebenen Lichtwellenleiter in vertikalen Schleifen lose und freihängend verlaufen und über mindestens eine Laufrolle geführt sind.

Bei der Einbringung von Lichtwellenleitern in eine durch Extrusion aufgebrachte schlauchförmige Außenhülle ist darauf zu achten, daß der Lichtwellenleiter im Endzustand gegenüber dieser Außenhülle eine definierte Längenzuordnung (meist eine definierte Überlänge) aufweist. Dabei ist zu berücksichtigen, daß normalerweise vom Einlauf her (z.B. beim Faserabzug) eine gewisse Längs Zugspannung auf die Lichtwellenleiteradern ausgeübt werden muß, um ein ruhiges Laufen der Faser und ein definiertes Anliegen in Krümmungen zu erzeugen. Dies gilt auch dann, wenn ein gerader gestreckter Verlauf (wie z.B. beim Durchlaufen durch ein Kühlbecken) innerhalb der Fertigungslinie vorgesehen ist, oder wenn das umhüllte strangförmige Gut frei hängend verläuft, weil zu irgend einem Zeitpunkt die Längenzuordnung nur durch eine ausreichende, das Anliegen bewirkende Rückhalte-Kraft zu erzielen ist. Der vorliegenden Erfindung liegt die Aufgabe zugrunde, unter Ausnutzung des bremsenden Einflußes des Ablaufs eine möglichst sichere, genaue und dem Zweck angepaßte Längenzuordnung von Faserhülle zu der/den Faser(n) zu schaffen, wobei je nach Produkt die ausnutzbare Überlänge der Fasern zwischen 0 und 1 % in der gestreckten Bündelhülle liegen soll.

Gemäß der Erfindung wird dies bei einer Einrichtung der eingangs genannten Art dadurch erreicht, daß in jeder der beiden Kammern mindestens eine Speicherscheibe vorgesehen ist, die jeweils in der Weise angeordnet ist, daß durch wahlweise Umschlingung der Speicherscheiben entlang ihres Umfangs mit dem strangförmigen Gut die Einrichtung an die Herstellung von unterschiedlichen Typen des strangförmigen Guts anpaßbar ist. Eine derartige Speicherscheibe bietet die Möglichkeit, daß durch die Umschlingung in Form mindestens einer Windung eine Entkopplung der Lichtwellenleiteradern gegenüber den Bremsvorgängen am Eingang erreicht wird.

Die Speicherscheiben haben vorteilhaft einen Durchmesser von $\geq 900$ mm, um die unter dem Einfluß der Bremskräfte auftretende Fehllänge- $\Delta r/_R$ ($r$ = radiale Auswanderung Faser in der Aderhülle von der Mittellage aus, $R$ = Speicherscheibenradius) möglichst klein zu halten. Diese Unterlänge der Faser muß durch nachfolgendes thermisches Schrumpfen der Hülle kompensiert werden.

Weiterbildungen der Entwicklung sind in Unteransprüchen wiedergegeben.

Die Erfindung und ihre Weiterbildungen werden nachfolgend anhand von Zeichnungen weiter erläutert. Es zeigen:

Fig. 1    in Seitenansicht den Aufbau einer Lichtwellenleiter-Bündellinie mit einer Einrichtung gemäß der Erfindung und

Fig. 2    die Bündeladerlinie nach Fig. 1 in Draufsicht.

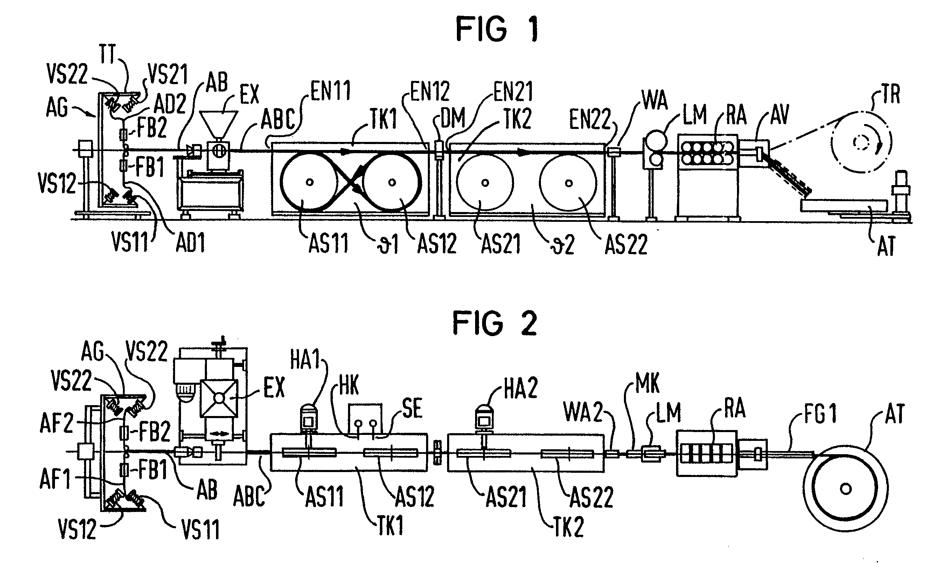

In Fig. 1 und 2 ist ein Ablaufgestell AG vorgesehen, das mit Vorratsspulen VS11, VS12, VS21 und VS22 bestückt ist. Die ablaufenden Lichtwellenleiteradern AF1 und AF2 werden über eine Faserbremse FB1 bzw. FB2 und über entsprechende Rollen in bekannter Weise zu einem Bündel zusammengefaßt, das mit AB bezeichnet ist. Anstelle eines derartigen Bündels von Lichtwellenleitern kann aber auch ein einzelner Lichtwellenleiter in der nachfolgend noch beschriebenen Weise weiter behandelt werden.

Das Lichtwellenleiterbündel AB gelangt (gegebenenfalls nach Zuführung einer Füllmasse) zu einem Extruder EX, durch den eine erste Umhüllung in Form eines Kunststoffmaterials auf das ursprüngliche strangförmige Gut AB aufgebracht wird. Am Ausgang des Extruders EX ist das mit einer losen Hülle umgebene strangförmige Gut mit ABC bezeichnet. Bei zweischichtigen Hüllen folgt noch ein weiterer Extruder nach.

Das mit einer zweifachen Umhüllung umgebene strangförmige Gut ABC läuft in eine erste temperierte Kammer TK1 ein, die etwa rechteckförmigen Querschnitt aufweist und zwei Speicherscheiben AS11 und AS12 enthält. Die Speicherkammer TK1 ist bis zu einer bestimmten Höhe (i.a. bis kurz unter Achshöhe) mit einer temperierenden Flüssigkeit gefüllt. Diese beiden Speicherscheiben liegen unterhalb einer Fluchtlinie, die durch den linken Eingang EN11 und durch den rechten Ausgang EN12 gegeben ist. Mindestens eine der beiden Scheiben, in vorliegendem Beispiel die Abzugscheibe AS11, wird durch einen Hilfsantriebsmotor HA1 bewegt, und zwar so, daß die Reibungsmomente gerade kompensiert werden. Die Scheiben AS11 und AS12 sind reine Speicherscheiben, also keine Abzugscheiben. Da ihre Lagerung (z.B. unter Wasser als Kühlflüssigkeit) aber nicht reibungsfrei oder spritzwassergeschützt ist, sorgt der Drehmoment-gesteuerte Hilfsantrieb HA1 dafür, daß das Reibungsmoment gerade kompensiert wird. Der Antriebsstrom des Elektromotors HA1 wird z.B. vorteilhaft auf einem empirisch ermittelten Wert konstant gehalten, so daß die gewünschte Reibungskompensation erreicht wird.

Die temperierte Kammer TK1 wird auf einer bestimmten Temperatur $\vartheta 1$ gehalten, und zwar in einer Weise, die noch genauer erläutert wird. Um eine möglichst gute Abkopplung der Lichtwellenleiteradern von der Bremswirkung z.B. der Aderablaufbremsen FB1 und FB2 zu erreichen, wird mindestens eine der Abzugscheiben der ersten temperierten Kammer TK1 einmal von dem strangförmigen Gut ABC umschlungen. Bei der vorliegenden Zeichnung ist angenommen, daß beide Scheiben (AS11 und AS12) in Form einer Acht umschlungen werden und das strangförmige Gut von der Speicherscheibe AS11 aus zum Ausgang EN12 der ersten Kammer läuft. Am Ausgang der ersten Kammer TK1 kann eine Dickenmeßeinrichtung DM vorgesehen sein, bevor das strangförmige Gut ABC in eine zweite temperierte Speicherkammer TK2 einläuft, die genauso aufgebaut ist wie die erste Kammer TK1. Im vorliegenden Beispiel ist angenommen, daß die zweite temperierte Kammer TK2 (Temperatur $\vartheta 2$) von dem strangförmigen Gut ABC geradlinig durchlaufen wird, d.h. dieses verläuft gestreckt vom Eingang EN21 zum Ausgang EN22. Für den Fall, daß eine Flüssigkeitskühlung (z.B. durch Wasser) im Bereich der temperierten Kammern TK1 oder TK2 vorgesehen ist, sind an deren Ausgang entsprechende Absaugevorrichtungen vorzusehen. Im vorliegenden Ausführungsbeispiel ist eine derartige Anordnung am Ausgang der temperierten Kammer TK2 angebracht und mit WA bezeichnet.

Zu Kühlzwecken oder auch zur Erwärmung können die Kammern TK1 und TK2 möglichst hoch mit einer kühlenden/erwärmenden Flüssigkeit gefüllt werden, die entsprechend temperaturgeregelt wird. Dies kann (wie z.B. bei der Kammer TK1 dargestellt) durch einen Temperaturfühler SE und eine entsprechend gesteuerte Heiz- oder Kühlschlange HK erreicht werden. Das temperierte Bündel gelangt über eine Längenmeßeinrichtung LM zu einem Raupenabzug RA und einem geradlinig durchlaufenen Tellerwickler AT.

Der Entkopplungsspeicher TK2 macht es möglich, anstelle des Tellerwicklers AT das abgekühlte strangförmige Gut ABC direkt auf eine Kabeltrommel TR aufzuwickeln (in Fig. 1 gestrichelt angedeutet), und zwar mit entsprechend kleinem Kerndurchmesser.

Die beiden temperierten Speicher-Kammern TK1 und TK2 können bezüglich ihrer Abkoppeleigenschaften und bezüglich ihres Temperaturverhaltens unterschiedlich eingestellt werden. Dies bietet die Möglichkeit, die dargestellte Bündeladerline an die verschiedenen Betriebsfälle anzupassen, und zwar ohne aufwendige Umrüstvorgänge.

Im einzelnen ergeben sich folgende Betriebsmöglichkeiten:

1. Überlänge 0 oder sehr klein: Wickeln auf Teller AT (wie bekannt)

Prozess: Gestrecktes Durchlaufen beider Speicherkammern TK1 und TK2 im kalten Wasser. Herunterkühlen auf Raumtemperatur, aufwickeln. $\vartheta 1 \approx \vartheta 2 \approx 20°$ C. Die Hülle schrumpft auf dem Teller AT stets einige $10^{-4}$ nach, wodurch die zunächst vorhandenen Unterlängen der Fasern kompensiert werden.

2. Überlänge 0: Wickeln auf Trommel TR (mit viel kleinerem Durchmesser) z.B. 150 mm bis 300 mm Kerndurchmesser.

Prozess: Gestrecktes Durchlaufen nur der Speicherkammer TK1, während in der kammer TK2 mindestens eine Umschlingung auf AS21 oder AS22 erfolgt. Beide Speicher sind mit Kaltwasser gefüllt (wegen Beschickungsweise der Kammern max. zu etwa 60% ihrer Höhe.) $\vartheta 1 \approx \vartheta 2 \approx 10°$ bis $20°$ C. Die Abkopplung der Bremskräfte in der Speicherkammer TK2 erlaubt das Aufwickeln auf einen viel kleineren Trommelkern, ohne daß dieser das Längenverhältnis Faser bzw. Faserbündel zur Hülle bestimmt.

3. Überlänge groß (1% bis 1‰): Wickeln auf Teller AT

Prozeß: Gestrecktes Durchlaufen des Speichers TK1 bei hoher Temperatur, ($\vartheta 1 \approx 30°$ bis $110°$ C), Abkühlen auf dem Teller AT

oder umschlungenes Durchlaufen beider Speicherscheiben AS11 und AS12 der Speicherkammer TK1, Abkühlen ($\vartheta 2 \approx 10°$ bis $20°$ C) auf Raumtemperatur in der Speicherkammer TK2 (gestreckt oder umschlungen durchlaufen), Wickeln auf Teller AT. Wenn TK2 umschlungen durchlaufen wird, ist auch Aufwickeln auf Trommel TR möglich.

In diesem Fall muß die Temperatur der Speicherkammer TK1 höher sein als beim Abkühlen auf dem Teller AT, da der Teller einen größeren Durchmesser hat (Werte zwischen 1,1 und 1,5 m) als die Speicherscheiben AS11 bis AS22. Die Speicherscheiben AS11 bis AS22 sollen also so groß wie möglich sein.

4. Überlänge groß: (1% bis 1‰) Wickeln auf Trommel TR

Prozeß: Umschlingung beider Speicherscheiben AS11 und AS12 in der Speicherkammer TK1 bei hoher Temperatur ($\vartheta1 \approx 30°$ C bis $110°$ C), Umschlingung beider Speicherscheiben AS21 und AS22 der Speicherkammer TK2 bei Raumtemperatur ($\vartheta2 \approx 10°$ bis $20°$ C), Wickeln auf Trommel TR. In diesem Fall wird in der Speicherkammer TK1 die Faser von den Bremskräften entkoppelt und in der Speicherkammer TK2 wird die Zuordnung Faser/Hülle bei Raumtemperatur bestimmt. Eine Trommel kann das nicht, weil nur der Teller AT eine freie Längseinstellung der Hülle erlaubt, eine Trommel diese aber nicht zuläßt.

Wenn Überlängen der Faser eingestellt werden müssen, kann im Mittel mit einem Ausdehnungskoeffizienten $\alpha \approx 1 \cdot 10^{-4}$/K gerechnet werden. Von dieser Schrumpfung ist, wie vorne beschrieben, $\frac{\Delta r}{R}$ abzuziehen. Wenn also z.B. von einem Bündel mit einem Innendurchmesser von 2mm und mit einer radialen, effektiven Beweglichkeit für das Faserbündel von 0,7 mm (6 Fasern) eine Speicherscheibe mit 900 mm Durchmesser durchlaufen wird und die schließliche Überlänge beim Aufwickeln auf eine Spule $4 \cdot 10^{-3}$ betragen soll (dabei Speicherscheiben AS21 und AS22 umschlungen, wobei die Speicherkammer TK2 mit Wasser von Raumtemperatur ($\vartheta2 \approx 10°$ bis $20°$ stabilisiert) durchlaufen wird), so ist

$$\frac{\Delta l}{l} = 4 \cdot 10^{-3} = \Delta \vartheta \cdot 10^{-4} - \frac{0,7}{450}, \text{ also}$$

$$\Delta \vartheta = (4 \cdot 10^{-3} + \frac{0,7}{450}) \cdot 10^{4} = 56 \text{ K und}$$

die Temperatur $\vartheta1$ in der Speicherkammer TK1 ist $76°$ C. Wird direkt auf den Teller AT gewickelt und dort (langsam) abgekühlt, kann mit einem Durchmesser D = 1300 mm gerechnet werden und es ist die Temperaturdifferenz

$$\Delta \vartheta = (4 \cdot 10^{-3} + \frac{0,7}{650}) \cdot 10^{4} = 51 \text{ K}; \vartheta1 = 71°C,$$

wobei $\vartheta2 = 20°$ C vorausgesetzt ist. Die Differenzen sind also nicht sehr groß, aber auch nicht vernachlässigbar.

Das Abkühlen auf dem Teller AT ist außerdem nicht unproblematisch, da teilweise abgekühlte und noch erhitzte Windungen aufeinander geraten und sich gegenseitig beeinflussen können. Daher ist die definierte Vorkühlung in den Speichern TK1 und TK2 sehr erwünscht.

Die tatsächlich benötigten Temperaturen weichen von den theoretischen ab, weil der Ausdehnungskoeffizient nicht über einen großen Temperaturbereich konstant bleibt (er ist kleiner bei niedrigen, größer bei hohen Temperaturen) und außerdem in der Speicherkammer TK1 die Vorabkühlung mit der Entkopplungsstrecke zusammenfällt. Die Abkühlung muß also möglichst früh nach dem Extruder EX einsetzen und möglichst wirksam sein. Die höchsten Temperaturen $\vartheta1$ in der Speicherkammer TK1 treten bei maximaler Überlänge auf:

$$\frac{\Delta l}{l} = 0,8 \cdot 10^{-2}; \frac{\Delta r}{R} = \frac{1,1}{450},$$

$$0,8 \cdot 10^{-2} = 10^{-4} \cdot \Delta \vartheta - \frac{1,1}{450}$$

$$= (0,8 \cdot 10^{-2} + \frac{1,1}{450}) \cdot 10^{4} = 105 \text{K also}$$

$$\vartheta1 = 125°C, \text{ wenn } \vartheta2 = 20°C \text{ vorausgesetzt wird.}$$

Hier ist in der Speicherkammer TK1 also kein Wasser als Kühlflüssigkeit mehr möglich; evtl. kann Glykol verwendet oder es muß mit Heißluft gearbeitet werden. Nimmt man an, daß das Bündel den Extruder EX im Mittel mit etwa 200°C verläßt, sind ca. 80K wegzukühlen. Die Speicherkammer TK1 ist daher wahlweise mit einer heißen Flüssigkeit oder Heißluft zu betreiben. Eine Erniedrigung der Temperatur kann auch (bei mehreren Extrudern) durch eine Zusatzkühleinrichtung zwischen den Extrudern vorgenommen werden.

Die Umschlingungsweise ist eine Frage der Geschwindigkeit. Bei kleiner Geschwindigkeit können beide Speicherscheiben z.B. AS11 und AS22 insgesamt in Form einer 0 umschlungen werden. Dagegen ist bei höherer Geschwindigkeit eine Umschlingung in Form einer 8 zweckmäßiger. Im Prinzip kann außer bei sehr dicken Hüllen ABC auch eine Scheibe zweimal umschlungen werden, wobei die Selbstverlegungskräfte der relativ stabilen Adern genutzt werden.

Die erfindungsgemäße Einrichtung bietet also durch ihre besondere Gestaltung die Möglichkeit, eine Ader- oder Bündellinie ohne größere Umrüstung an die verschiedensten Betriebsfälle und Kabeltypen anzupassen. Dabei ist ausgangsseitig die Art der Aufwicklung (auf Trommel oder Wickelteller) frei wählbar.

**Patentansprüche**

1.  Einrichtung zur Behandlung von strangförmigem Gut, das mindestens einen Lichtwellenleiter enthält, und das eine lose Umhüllung aufweist, bestehend aus einem
    - Extruder (EX) zum Aufbringen der losen Umhüllung, und
    - zwei unabhängig temperierbaren Kammern (TK1, TK2), die dem Ausgang des Extruders (EX) nachgeschaltet sind, und durch die das strangförmige Gut zur Weiterbehandlung geführt wird,
    **dadurch gekennzeichnet,**
    daß in jeder der beiden Kammern (TK1, TK2) mindestens eine Speicherscheibe (AS11, AS21) vorgesehen ist, die jeweils in der Weise angeordnet ist, daß durch wahlweise Umschlingung der Speicherscheiben (AS11, AS21) entlang ihres Umfangs mit dem strangförmigen Gut die Einrichtung an die Herstellung von unterschiedlichen Typen des strangförmigen Guts anpaßbar ist.

2.  Einrichtung nach Anspruch 1,
    **dadurch gekennzeichnet,**
    daß die Speicherscheiben (AS11, AS21) mit einem, vorzugsweise Drehmoment-gesteuerten Hilfsantrieb (HA1, HA2) versehen sind.

3.  Einrichtung nach einem der vorhergehenden Ansprüche,
    **dadurch gekennzeichnet,**
    daß jede Kammer (TK1, TK2) zwei oder mehr Speicherscheiben enthält.

4.  Einrichtung nach Anspruch 3,
    **dadurch gekennzeichnet,**
    daß die Speicherscheiben (AS11, AS21) etwas außerhalb der Eingang und Ausgang miteinander verbindenden Fluchtlinie angeordnet sind, derart, daß wahlweise auch ein gestreckter Durchlauf durch die jeweilige Kammer (TK1 oder TK2) für das strangförmige Gut ermöglicht ist.

5.  Einrichtung nach einem der vorhergehenden Ansprüche,
    **dadurch gekennzeichnet,**
    daß die Kammern (TK1, TK2) wahlweise mittels Flüssigkeit oder mittels Luft temperierbar sind.

6.  Einrichtung nach einem der vorhergehenden Ansprüche,
    **dadurch gekennzeichnet,**
    daß die Kammern (TK1, TK2) auf unterschiedlichen, vorzugsweise stabilisierten Temperaturwerten gehalten sind.

7.  Einrichtung nach einem der vorhergehenden Ansprüche,
    **dadurch gekennzeichnet,**
    daß die erste temperierte Kammer (TK1) unmittelbar nach dem (ggf. letzten) Extruder (EX2) angeordnet ist.

8.  Einrichtung nach einem der vorhergehenden Ansprüche,

EP 0 193 940 B1

**dadurch gekennzeichnet,**
daß der Durchmesser der Speicherscheiben (AS11, AS12, AS21, AS22) möglichst groß, mindestens zu 900 mm gewählt wird.

9. Einrichtung nach einem der vorhergehenden Ansprüche,
**dadurch gekennzeichnet,**
daß eine Trommel (TR) vorgesehen ist, auf der bei Umschlingung der Speicherscheibe bzw. Speicherscheiben (AS21, AS22) der zweiten Kammer (TK2) die Aufwicklung des strangförmigen Gutes (ABC) erfolgt.

10. Einrichtung nach einem der Ansprüche 1 bis 8,
**dadurch gekennzeichnet,**
daß ein Teller (AT) vorgesehen ist, auf dem bei Umschlingung der Speicherscheibe bzw. der Speicherscheiben (AS11, AS12) der ersten Kammer (TK1) die Aufwicklung des strangförmigen Gutes (ABC) erfolgt.

11. Einrichtung nach einem der vorhergehenden Ansprüche,
**dadurch gekennzeichnet,**
daß zwei Speicherscheiben (AS11, AS12) in jeweils einer Kammer (TK1) so angeordnet sind, daß beide Speicherscheiben vom strangförmigen Gut (ABC) in Form einer Acht umschlingbar sind.

## Claims

1. Device for processing a product in strand form which contains at least one optical waveguide and which has a loose sheathing, said device comprising
   - an extruder (EX) for applying the loose sheathing, and
   - two independently temperature-controllable chambers (TK1, TK2), which are arranged downstream of the outlet of the extruder (EX) and through which the product in strand form is passed for further processing, characterised in that in each of the two chambers (TK1, TK2) there is provided at least one storage reel (AS11, AS21), which in each case is arranged in such a way that, by wrapping the product in strand form around the storage reels (AS11, AS21) along their circumference according to choice, the device can be adapted to the production of different types of product in strand form.

2. Device according to Claim 1, characterised in that the storage reels (AS11, AS21) are provided with a, preferably torque-controlled auxiliary drive (HA1, HA2).

3. Device according to one of the preceding claims, characterised in that each chamber (TK1, TK2) contains two or more storage reels.

4. Device according to Claim 3, characterised in that the storage reels (AS11, AS21) are arranged somewhat outside the line of alignment joining the inlet and outlet, in such a way that, as a matter of choice, an extended passage through the respective chamber (TK1 or TK2) for the product in strand form is also made possible.

5. Device according to one of the preceding claims, characterised in that the chambers (TK1, TK2) can, as a matter of choice, be temperature-controlled by means of liquid or by means of air.

6. Device according to one of the preceding claims, characterised in that the chambers (TK1, TK2) are kept at different, preferably stabilised temperature values.

7. Device according to one of the preceding claims, characterised in that the first temperature-controlled chamber (TK1) is arranged immediately after the (last, if applicable) extruder (EX2).

8. Device according to one of the preceding claims, characterised in that the diameter of the storage reels (AS11, AS12, AS21, AS22) is chosen to be as large as possible, at least 900 mm.

9. Device according to one of the preceding claims, characterised in that a drum (TR) is provided, on

6

which the winding-up of the product in strand form (ABC) takes place during wrapping around the storage reel or storage reels (AS21, AS22) of the second chamber (TK2).

10. Device according to one of Claims 1 to 8, characterised in that a plate (AT) is provided, on which the winding-up of the product in strand form (ABC) takes place during wrapping around the storage reel or the storage reels (AS11, AS12) of the first chamber (TK1).

11. Device according to one of the preceding claims, characterised in that two storage reels (AS11, AS12) are arranged in each case in a chamber (TK1) in such a way that both storage reels can be wrapped around by the product in strand form (ABC) in the form of an eight.

**Revendications**

1. Dispositif pour le traitement d'un produit en forme de cordon qui comporte au moins un guide d'ondes de lumière et qui possède une enveloppe ou gaine libre ou détachée, constitué par
   - une extrudeuse (EX) pour le dépôt de la gaine libre, et
   - deux chambres (TK1, TK2) susceptibles d'être mises en température indépendamment l'une de l'autre et à travers lesquelles le produit en forme de cordon est guidé pour son post-traitement,
   caractérisé par le fait que dans chacune des deux chambres (TK1, TK2) est prévu au moins un disque-accumulateur (AS11, AS21) qui est disposé de telle façon que par l'enroulement au choix des disques-accumulateurs (AS11, AS21) le long de leur périphérie avec le produit en forme de cordon le dispositif est susceptible d'être adapté à la fabrication de types différents du produit en forme de cordon.

2. Dispositif selon la revendication 1, caractérisé par le fait que les disques-accumulateurs (AS11, AS21) sont pourvus d'un entraînement auxiliaire (HA1, HA2), de préférence commandé en fonction du couple de rotation.

3. Dispositif selon l'une des revendications précédentes, caractérisé par le fait que chaque chambre (TK1, TK2) comporte deux ou plusieurs disques-accumulateurs.

4. Dispositif selon la revendication 3, caractérisé par le fait que les disques-accumulateurs (AS11, AS21) sont disposés quelque peu en dehors de la ligne droite d'alignement qui relie entre elles l'entrée et la sortie, la réalisation étant telle qu'au choix, on rend possible également un passage allongé du produit en forme de cordon à travers la chambre concernée (TK1 ou TK2).

5. Dispositif selon l'une des revendications précédentes, caractérisé par le fait que les chambres (TK1, TK2) sont susceptibles d'être amenées en température, au choix, soit à l'aide d'un liquide ou à l'aide de l'air.

6. Dispositif selon l'une des revendications précédentes, caractérisé par le fait que les chambres (TK1, TK2) sont maintenues à des valeurs de températures de préférence stabilisées et différentes.

7. Dispositif selon l'une des revendications précédentes, caractérisé par le fait que la première chambre de mise en température (TK1) est disposée directement après (éventuellement la dernière) extrudeuse (EX2).

8. Dispositif selon l'une des revendications précédentes, caractérisé par le fait que le diamètre des disques-accumulateurs (AS11, AS12, AS21, AS22) est choisi à une valeur aussi grande que possible, au moins égale à 900 mm.

9. Dispositif selon l'une des revendications précédentes, caractérisé par le fait qu'il est prévu un tambour (TR) sur lequel, lors de l'enroulement du disque-accumulateur ou des disques-accumulateurs (AS21, AS22) de la seconde chambre (TK2), a lieu l'enroulement du produit en forme de cordon (ABC).

10. Dispositif selon l'une des revendications 1 à 8, caractérisé par le fait qu'il est prévu un plateau (AT) sur lequel, lors de l'enroulement du disque-accumulateur ou des disques-accumulateurs (AS11, AS12) de la première chambre (TK1), a lieu l'enroulement du produit en forme de cordon.

11. Dispositif selon l'une des revendications précédentes, caractérisé par le fait que deux disques accumulateurs (AS11, AS12) sont disposés respectivement dans une chambre (TK1) de manière que les deux disques-accumulateurs soient susceptibles d'être enroulés par le produit en forme de cordon (ABC) sous la forme d'un huit.

# FIG 1

# FIG 2

EP 0 193 940 B1